# FASCICULE DE BREVET EUROPEEN

(11) **EP 2 129 927 B1**
(45) Date de publication et mention de la délivrance du brevet: **27.10.2010**
(21) Numéro de dépôt: 08775685.4
(22) Date de dépôt: 06.03.2008
(51) Int. Cl.: F16D 13/71

(54) **EMBRAYAGE A DIAPHRAGME COMPRENANT UNE ARTICULATION DE DIAPHRAGME**
MEMBRANENKUPPLUNG MIT MEMBRANENGELENKBEWEGUNG
DIAPHRAGM CLUTCH WITH DIAPHRAGM ARTICULATION

(30) Priorité: 23.03.2007 FR 0754005
(43) Date de publication de la demande: 09.12.2009
(73) Titulaire: Valeo Embrayages, 80009 Amiens (FR)
(72) Inventeur: DUBOIS, Bernard, F-80300 Albert (FR); CORDIER, Christophe, F-80090 Amiens (FR)
(74) Mandataire: Lemaire, Marc
(86) Numéro de dépôt international: PCT/FR2008/050382
(87) Numéro de publication internationale: WO 2008/125780

(56) Documents cités:
- FR-A- 2 692 637
- GB-A- 1 255 911

## Description

La présente invention se rapporte à un embrayage à diaphragme comprenant une articulation de diaphragme.

Un tel embrayage, utilisé notamment dans le domaine automobile, comprend typiquement un couvercle, un plateau de pression, un diaphragme monté, éventuellement précontraint, entre le couvercle et le plateau de pression, et des moyens d'articulation de ce diaphragme par rapport au couvercle.

Dans un tel embrayage, en position embrayée, le diaphragme exerce sur le plateau de pression des efforts suffisants pour bloquer la friction et permettre ainsi la transmission du couple moteur à la boîte de vitesses.

Le débrayage d'un tel embrayage est réalisé, dans le cas d'un embrayage à diaphragme poussé, par appui par une butée sur la partie centrale du diaphragme selon l'axe du diaphragme. Ce diaphragme coopère alors avec les moyens d'articulation, ménagés entre le diaphragme et le couvercle, de manière que la partie radialement extérieure du diaphragme s'écarte du plateau de pression. Dans ces conditions, le plateau de pression s'éloigne alors du disque d'embrayage sous l'effet de moyens de rappel élastiques, libérant ainsi la friction, ce qui permet de cesser de transmettre le couple du moteur à la boîte de vitesses et, le cas échéant, d'effectuer les changements de rapports de vitesses nécessaires.

On a pu constater qu'à la suite d'un grand nombre de débrayages, l'articulation du diaphragme par rapport au couvercle avait tendance à s'user (on parle d'usure et/ou de « matage ») sous l'effet des mouvements répétés du diaphragme, et qu'il finissait ainsi par apparaître des jeux entre cette articulation et le diaphragme. Ces phénomènes de matage et/ou d'usure sont particulièrement observés dans les embrayages des véhicules du type véhicules industriels ou « poids lourds » où les efforts exercés par le diaphragme sur l'articulation peuvent actuellement atteindre 12 000 N.

L'apparition de tels jeux a pour effet de réduire la course de la périphérie du diaphragme lorsque celui-ci est poussé par la butée d'embrayage, et ainsi de réduire la course du plateau de pression lors du passage de la position embrayée à la position débrayée.

Il résulte de ceci qu'au bout d'un certain temps, il n'est plus possible de réaliser un débrayage complet, c'est-à-dire de supprimer tout contact entre le plateau de pression et les garnitures de la friction : une partie du couple du moteur continue ainsi d'être transmise à ce disque, ce qui rend difficile, voire impossible, les changements de rapport de la boîte de vitesses.

On connaît du document DE 1 775 116 un embrayage à diaphragme comprenant un couvercle, un plateau de pression, un diaphragme monté entre le couvercle et le plateau de pression, des moyens d'articulation du diaphragme par rapport au couvercle, et un organe annulaire élastique précontraint, monté opposé aux moyens d'articulation par rapport au diaphragme de manière à maintenir le diaphragme plaqué contre les moyens d'articulation. Selon ce document, l'organe annulaire élastique est monté en appui sur la tête d'entretoises solidaires du couvercle et qui passent au travers d'ouvertures réalisées dans le diaphragme.

Bien que cet embrayage permette de compenser une partie de l'usure du diaphragme, il ne présente pas une rigidité satisfaisante pour permettre d'exercer sur l'articulation des efforts qui peuvent atteindre 12 000 N.

On connaît par ailleurs du document FR 2 692 637 un embrayage à diaphragme, comprenant un couvercle, un plateau de pression, un diaphragme monté entre le couvercle et le plateau de pression, un premier organe annulaire rigide disposé entre le diaphragme et le plateau de pression et fixé au couvercle au moyen d'entretoises, des moyens d'articulation du diaphragme par rapport au couvercle et un second organe annulaire élastique précontraint, monté en appui sur le premier organe annulaire rigide, opposé aux moyens d'articulation par rapport au diaphragme, les organes annulaires rigide et élastique étant disposés de manière coaxiale, les entretoises étant implantées par rapport à l'organe annulaire rigide sensiblement selon un cercle d'implantation. Cet embrayage ne présente cependant pas une rigidité satisfaisante.

Un but de l'invention est donc de proposer un embrayage à diaphragme permettant de compenser l'usure de l'articulation du diaphragme de manière à permettre de réaliser un débrayage complet de l'embrayage malgré l'usure de l'articulation du diaphragme par rapport au couvercle tout en présentant une rigidité améliorée par rapport aux embrayages connus de l'état de la technique.

On atteint ce but de l'invention au moyen d'un embrayage à diaphragme, comprenant un couvercle, un plateau de pression, un diaphragme monté entre le couvercle et le plateau de pression, un premier organe annulaire rigide disposé entre le diaphragme et le plateau de pression et fixé au couvercle au moyen d'entretoises, des moyens d'articulation du diaphragme par rapport au couvercle et un second organe annulaire élastique précontraint, monté en appui sur le premier organe annulaire rigide, opposé aux moyens d'articulation par rapport au diaphragme, les organes annulaires rigide et élastique étant disposés de manière coaxiale, les entretoises étant implantées par rapport à l'organe annulaire rigide sensiblement selon un cercle d'implantation.

L'embrayage selon l'invention est remarquable en ce que la zone d'appui du second organe annulaire élastique sur le premier organe annulaire rigide s'étend sensiblement selon le cercle d'implantation des entretoises.

Ainsi, comme il apparaîtra plus clairement à la lumière de la description de l'invention qui va être donnée par la suite, l'usure des moyens d'articulation qui se traduit usuellement par une diminution de cote, qui donne lieu à un jeu entre tes moyens d'articulations et le diaphragme, est compensée par la présence d'un organe annulaire élastique monté précontraint. En effet, du fait de son montage précontraint, l'organe annulaire élastique se déforme élastiquement de manière à maintenir le diaphragme plaqué contre les moyens d'articulations. Ainsi, il n'y a plus de jeu entre le diaphragme et les moyens d'articulations et la précontrainte est prédéfinie et maîtrisée.

Par ailleurs, le montage du second organe annulaire élastique sur des moyens de support formés par un premier organe annulaire rigide monté coaxialement à l'organe annulaire élastique permet d'obtenir une zone de contact plus importante entre les organes annulaires élastique et rigide, par rapport à l'embrayage décrit dans DE 1 775 116, et, ainsi, de répartir les efforts entre les organes annulaires élastique et rigide sur une plus grande surface également. Ainsi, un tel montage permet d'obtenir une meilleure rigidité du dispositif de telle sorte que l'embrayage selon l'invention est adapté à des efforts très importants - typiquement de l'ordre de grandeur susmentionné - exercés par le diaphragme sur l'articulation.

De plus, la zone d'appui du second organe annulaire élastique sur le premier organe annulaire rigide s'étendant selon le cercle d'implantation des entretoises permet de rendre l'embrayage plus rigide et moins sujet à l'usure par rapport à l'embrayage décrit dans le document FR 2 692 637. Cette mesure permet en effet de réduire de manière très importante voir d'éliminer complètement les efforts de flexion qui apparaissent dans l'embrayage décrit dans le document FR 2 692 637, du fait que la zone de contact du second organe annulaire élastique sur le premier organe annulaire rigide est située, d'après FR 2 692 637, radialement à l'extérieur du cercle d'implantation des entretoises.

De préférence, l'embrayage selon l'invention présente une ou plusieurs des caractéristiques suivantes prises seules ou en combinaison :
- le second organe annulaire élastique comporte une première partie formant rondelle Belleville en contact avec le diaphragme ;
- la première partie formant rondelle Belleville du second organe annulaire élastique est coudée au niveau de la zone de contact avec le diaphragme ;
- la première partie formant rondelle Belleville du second organe annulaire élastique présente, au niveau de la zone de contact avec le diaphragme, un rayon de courbure, dans tout plan axial de l'embrayage, au moins égal à 5 mm ;
- le second organe annulaire élastique comporte une deuxième partie formant rondelle Belleville en contact avec le premier organe annulaire rigide ou avec le couvercle ;
- la deuxième partie formant rondelle Belleville du second organe annulaire élastique est coudée au niveau de la zone de contact avec le premier organe annulaire rigide ou avec le couvercle ;
- la deuxième partie formant rondelle Belleville du second organe annulaire élastique présente, au niveau de la zone de contact avec le premier organe annulaire rigide ou avec le couvercle, un rayon de courbure, dans tout plan axial de l'embrayage, au moins égal à 5 mm ;
- le premier organe annulaire rigide est solidaire d'entretoises fixées au couvercle et traversant le diaphragme ;
- le second organe annulaire élastique présente des évidements de passage pour les entretoises ;
- le second organe annulaire élastique est conformée pour qu'en phase de stockage de l'embrayage, le bord radialement externe du second organe annulaire élastique soit en appui sur le premier organe annulaire rigide ; et
- en phase de stockage de l'embrayage, le diaphragme est en contact avec le bord radialement interne du couvercle.

D'autres caractéristiques et avantages de l'invention apparaîtront à l'examen de la description d'un mode de réalisation préféré qui va suivre, présenté uniquement à titre d'exemple illustratif et non limitatif, en référence aux figures ci-annexées sur lesquelles :
- la figure 1 représente en perspective un détail d'un embrayage à diaphragme poussé selon l'invention ;
- la figure 2 représente en coupe axiale un embrayage à diaphragme poussé neuf tel que représenté à la figure 1 ;
- la figure 3 représente en coupe l'embrayage à diaphragme poussé de la figure 2 après un grand nombre d'utilisations ; et
- les figures 4 et 5 représentent deux coupes axiales d'un embrayage à diaphragme poussé selon l'invention, respectivement à l'état monté et à l'état de stockage.

Dans la suite de la description, les éléments identiques ou de fonction identique sont repérés, sauf mention contraire, par la même référence numérique.

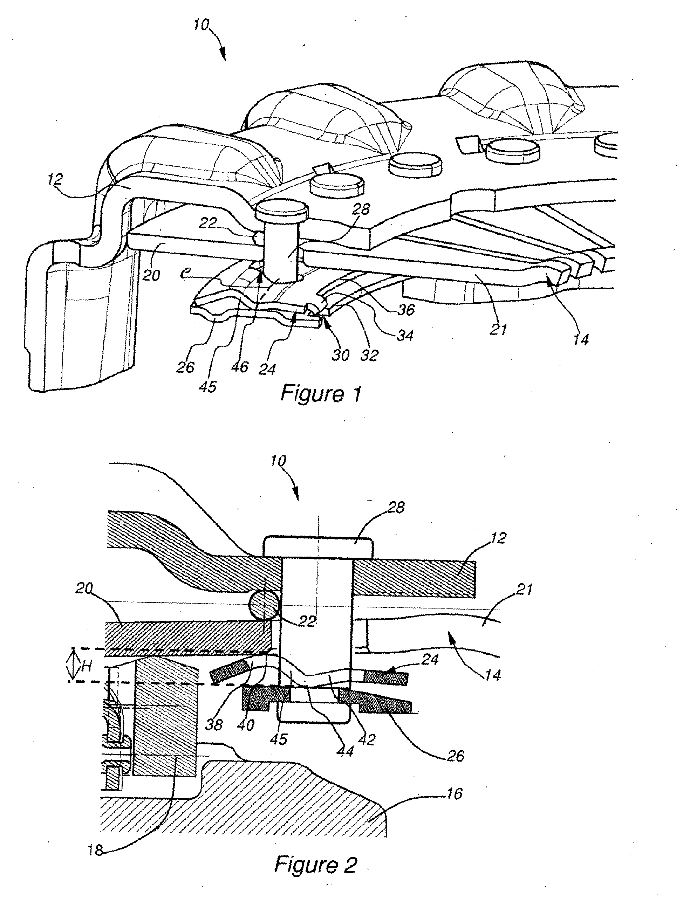

On se reporte à présent à la figure 1 sur laquelle est représenté un embrayage à diaphragme poussé 10 conforme au mode de réalisation préféré de l'invention. On voit sur cette figure 1 que l'embrayage 10 selon l'invention, comporte un couvercle 12 relié par des moyens de fixation appropriés à un volant d'inertie (non représenté) lui-même monté sur l'arbre de sortie d'un moteur par exemple du type à combustion interne (non représenté).

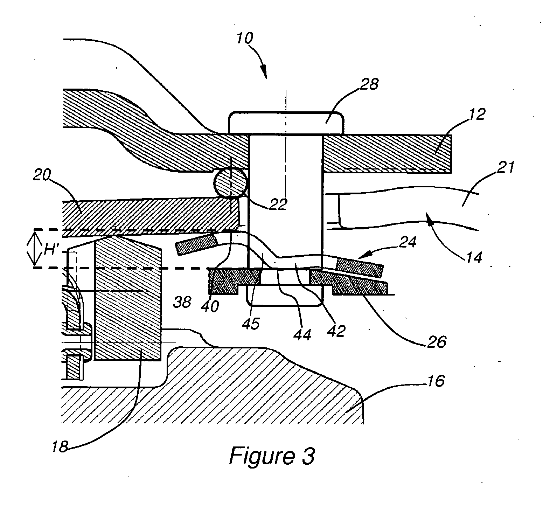

Entre le couvercle 12 et le volant sont disposés, dans cet ordre : un diaphragme 14, un plateau de pression 16 (voir figures 2 et 3) et une friction (non représentée). De manière optionnelle, un dispositif 18 de compensation d'usure du plateau de pression est disposé entre le diaphragme 14 et le plateau de pression 16.

Le diaphragme 14 est monté entre le couvercle 12 et le plateau de pression 16. Ce diaphragme 14 comporte d'une part une partie périphérique 20 et d'autre part des doigts 21 qui s'étendent radialement vers l'intérieur du diaphragme 14 à partir de la partie périphérique 20.

Sur cette figure 1, le diaphragme 14 est monté de manière à pouvoir basculer par rapport au couvercle 12 autour de moyens d'articulation 22, réalisés ici sous forme d'un jonc monté entre le couvercle 12 et le diaphragme 14.

L'embrayage 10 représenté sur la figure 1 comporte également un moyen formant support 26 fixe par rapport au couvercle 12 et disposé entre le diaphragme 14 et le plateau de pression 16. Le moyen formant support fixe est réalisé en l'espèce sous la forme d'un premier organe annulaire rigide 26. Sur ce premier organe annulaire rigide 26, un second organe annulaire élastique 24 est monté précontraint. Ce second organe annulaire élastique est réalisé idéalement, comme cela est représenté sur les figures, sous la forme d'une rondelle élastique 24, de préférence en acier en chrome-vanadium (par exemple en 50CV4).

De manière remarquable, le premier organe annulaire rigide 26 est disposé de manière coaxiale avec le second organe annulaire élastique 24 et est solidaire d'entretoises 28 fixées au couvercle 12 et traversant le diaphragme 14. Tel que représenté sur cette figure 1, ce premier organe annulaire rigide est réalisé sous la forme d'une rondelle rigide 26 qui comporte au moins un évidement 30 ménagé au niveau de son périmètre radialement interne 32, cet évidement 30 étant de section sensiblement complémentaire à une projection 34 réalisée au niveau du périmètre radialement interne 36 de la rondelle élastique 24. Cette projection 34 et cet évidement 30 permettent une mise en place facilitée de la rondelle élastique 24 par rapport à la rondelle rigide 26 pendant la phase de montage.

Les entretoises 28 sont implantées par rapport à la rondelle rigide 26 selon un cercle d'implantation C (représenté partiellement à la figure 1, en traits discontinus) qui s'étend donc sensiblement dans le plan de cette rondelle rigide 26.

De manière remarquable, la zone d'appui de la rondelle élastique 24 sur la rondelle rigide 26 s'étend sensiblement selon le cercle d'implantation C des entretoises 28 par rapport à la rondelle rigide 26.

La rondelle élastique 24 comporte une première partie 38 formant rondelle Belleville en contact avec le diaphragme 14, qui, idéalement, est coudée au niveau de la zone 40 de contact avec le diaphragme 14. Cette première partie 38 formant rondelle Belleville, annulaire, et la rondelle élastique 24 sont coaxiales. Dans un plan axial de la rondelle élastique 24, le rayon de courbure de la première partie 38 de la rondelle élastique 24 est idéalement grand de manière à accroître la zone 40 de contact de la rondelle élastique 24 avec le diaphragme 14 pour éviter une usure importante et rapide de la rondelle élastique 24. De préférence, ce rayon de courbure est au moins égal à 5 mm.

Par ailleurs, selon le mode de réalisation préféré de l'invention représenté sur les figures, la rondelle élastique 24 comporte une deuxième partie 42 formant rondelle Belleville qui est en contact avec le moyen formant support 26. Cette deuxième partie 42 formant rondelle Belleville, annulaire, et la rondelle élastique 24 sont coaxiales. Idéalement, cette deuxième partie 42 de la rondelle élastique 24 est coudée au niveau de la zone de contact 44 avec la rondelle rigide 26, le rayon de courbure de cette deuxième partie 42 de la rondelle élastique 24 étant grand - de préférence au moins égal à 5 mm - de manière que la zone de contact 44 de la rondelle élastique 24 avec la rondelle rigide 26 soit relativement étendue et éviter de ce fait une usure importante et rapide de la rondelle élastique 24.

La rondelle élastique 24 présente en outre des bras de liaison 45 qui relient les première et deuxième parties 38, 42 de la rondelle élastique 24 qui forment rondelle Belleville. Dans ces bras de liaison 45, des évidements 46 de passage pour les entretoises 28 sont ménagés qui, idéalement, sont disposés entre les première et deuxième parties 38, 42 de la rondelle élastique 24 formant rondelle Belleville. Ces évidements 46 permettent ainsi un montage compact de l'embrayage 10 selon l'invention. Les évidements 46 permettent en outre un centrage de la rondelle élastique 24 dans des zones de faible contrainte.

De manière préférée, les évidements 46 sont oblongs et présentent un jeu fonctionnel par rapport aux entretoises 28 de manière qu'une entretoise 28 ne peut pas venir en appui sur le bord interne des évidements 46. En outre, ces évidements 46 sont plus grands pour ne pas générer de concentration de contraintes sur le diaphragme.

Enfin, la rondelle élastique 24 peut, comme cela est représenté sur les figures ci-annexées, être prolongée de part et d'autre des première et deuxième parties 38, 42 formant rondelle Belleville de manière à rendre la rondelle élastique 24 plus rigide et plus solide. De manière préférée, la rondelle élastique 24 présente une courbe de charge du type rondelle de Belleville.

Le mode de fonctionnement et des avantages de l'embrayage selon l'invention résultent directement de la description qui précède.

Sur la figure 2, l'embrayage 10 selon-le premier mode de réalisation de l'invention est représenté dans un état sensiblement neuf.

Le fonctionnement de cet embrayage 10 selon l'invention, notamment durant les phases de débrayage et d'embrayage, est semblable au fonctionnement d'un embrayage à diaphragme poussé classique à ceci près qu'ici, la rondelle élastique 24 se déforme de manière élastique au cours de ces différentes phases de manière que la rondelle élastique 24 soit toujours en contact à la fois avec le diaphragme 14 et avec la rondelle rigide 26. Ainsi, avantageusement, on assure le contact permanent du jonc d'articulation 22 avec le diaphragme 14 et le couvercle 12 de l'embrayage 10.

De plus, le montage de la rondelle élastique 24 sur la rondelle rigide 26, montée coaxialement à la rondelle élastique 24, permet d'obtenir une zone de contact entre ces rondelles élastique 24 et rigide 26 plus importante que dans le cas de l'embrayage décrit dans DE 1 775 116. Ainsi, les efforts entre les organes annulaires élastique et rigide sont répartis sur une plus grande surface également, ce qui permet d'obtenir une meilleure rigidité du dispositif de telle sorte que l'embrayage selon l'invention est adapté à des efforts très importants - typiquement de l'ordre de grandeur susmentionné - exercés par le diaphragme sur l'articulation de part et d'autre de ce jonc, réduisant ainsi l'usure de la rondelle élastique contre le diaphragme et l'usure de la rondelle élastique contre la rondelle rigide.

Par ailleurs, du fait que la zone d'appui de la rondelle élastique 24 sur la rondelle rigide 26 s'étend sensiblement selon le cercle d'implantation c des entretoises 28 par rapport à la rondelle rigide 26, l'embrayage selon l'invention est moins soumis à des efforts de flexions, notamment au niveau de la rondelle rigide 26, qui pourraient engendrer une usure ou tout autre détérioration de cette rondelle rigide 26. De fait, le travail des bouterolles d'entretoise est optimisé car l'effort de la rondelle élastique 24 sur la rondelle rigide 26 s'applique sur le cercle d'implantation des entretoises 28 par rapport à la rondelle rigide 26. Par suite, il est possible de soumettre l'embrayage selon l'invention à des efforts plus importants et/ou de réduire le nombre des entretoises 28.

La figure 3 représente l'embrayage 10 de la figure 1 après un grand nombre d'embrayages et de débrayages qui ont provoqué l'usure du jonc d'articulation 22 et des zones de contact 40, 44 de la rondelle élastique 24 avec le diaphragme 14 et la rondelle rigide 26, respectivement. Cette usure se traduit par le fait que la distance H', selon la direction axiale, entre les zones de contacts 40, 44 est supérieure sur la figure 3 donc après un grand nombre d'embrayages et de débrayages par rapport à cette même dimension à neuf H comme représentée sur la figure 2.

Avec un embrayage classique, l'usure du jonc d'articulation 22 et des zones de contact 40, 44 se traduit par l'apparition de jeux entre le jonc d'articulation 22, d'une part, et le couvercle 12 et/ou le diaphragme 14, d'autre part, et ainsi qu'entre la rondelle élastique 24, d'une part, et le diaphragme 14 et/ou la rondelle rigide 26, d'autre part. Ici, ce jeu est récupéré par la déformation élastique de la rondelle élastique 24 montée précontrainte entre le diaphragme 14 et la rondelle rigide 26. Notamment, la première partie 38 de la rondelle élastique 24 formant rondelle Belleville et/ou la deuxième partie 42 formant rondelle Belleville permettent, par leur déformation élastique, de rattraper le jeu créé par l'usure du jonc d'articulation 22 et des zones de contact 40, 44. Plus précisément, le jeu est rattrapé par la déformation de la partie de la rondelle élastique 24 disposée radialement entre la zone 40 de contact de la rondelle élastique 24 avec le diaphragme 14 et la zone de contact 44 de la rondelle élastique 24 avec la rondelle rigide 26. Ainsi, même si le jonc d'articulation 22 et les zones de contact 40, 44 s'usent de telle sorte que la distance entre ces zones de contact 40, 44 selon la direction axiale de l'embrayage 10 augmente, la rondelle élastique 24 permet de compenser cette usure.

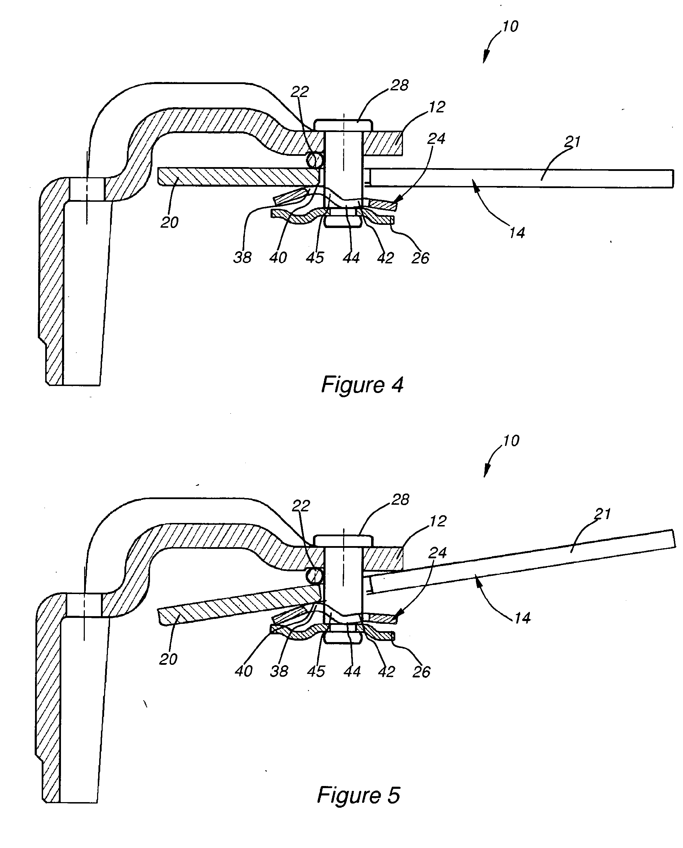

On se réfère maintenant aux figures 4 et 5 qui représentent deux coupes axiales d'un embrayage à diaphragme poussé selon l'invention, respectivement en fonctionnement et en mode de stockage, c'est-à-dire lorsque le diaphragme n'est pas soumis à une force axiale, notamment par la butée, contrairement à ce qui est le cas lorsque l'embrayage 10 est monté dans un véhicule automobile.

On peut noter sur la figure 4, que, lorsque l'embrayage 10 est à l'état monté, il n'y a pas de contact entre l'extrémité radialement externe de la rondelle élastique 24 et la rondelle rigide 26, ni entre le diaphragme 14 et l'extrémité radialement interne du couvercle 12.

Au contraire, à l'état de stockage de l'embrayage 10 selon l'invention, l'extrémité radialement externe de la rondelle élastique 24 est en appui sur la rondelle rigide 26 tandis que le diaphragme 14 est en contact avec l'extrémité radialement interne du couvercle 12. On limite ainsi avantageusement la déformation de la rondelle élastique 24 pendant les phases de stockage de l'embrayage selon l'invention, cette déformation pouvant engendrer une déformation plastique préjudiciable de la rondelle élastique 24.

Bien entendu, la présente invention n'est pas limitée au mode de réalisation décrit et représenté, fourni à titre d'exemple illustratif et non limitatif.

Ainsi, on peut concevoir un embrayage à diaphragme poussé comprenant une rondelle élastique ne comportant que la première partie formant rondelle Belleville en contact avec le diaphragme, notamment dans le cas d'usures plus faibles des moyens d'articulations, ce qui permet en outre de réaliser une articulation plus compacte pour l'embrayage.

## Revendications

1. Embrayage à diaphragme (10), comprenant un couvercle (12), un plateau de pression (16), un diaphragme (14) monté entre le couvercle (12) et le plateau de pression (16), un premier organe annulaire rigide (26) disposé entre le diaphragme (14) et le plateau de pression (16) et fixé au couvercle (12) au moyen d'entretoises (28), des moyens d'articulation du diaphragme (22) par rapport au couvercle (12) et un second organe annulaire élastique (24) précontraint, monté en appui sur le premier organe annulaire rigide (26), opposé aux moyens d'articulation (22) par rapport au diaphragme (14), les organes annulaires rigide (26) et élastique (24) étant disposés de manière coaxiale, les entretoises (28) étant implantées par rapport à l'organe annulaire rigide (26) sensiblement selon un cercle d'implantation (C),
embrayage **caractérisé en ce que** la zone d'appui du second organe annulaire élastique (24) sur le premier organe annulaire rigide (26) s'étend sensiblement selon le cercle d'implantation (C) des entretoises (28).

2. Embrayage selon la revendication 1, **caractérisé en ce que** le second organe annulaire élastique (24) comporte une première partie (38) formant rondelle Belleville en contact avec le diaphragme (14).

3. Embrayage selon la revendication 2, **caractérisé en ce que** la première partie (38) formant rondelle Belleville du second organe annulaire élastique (24) est coudée au niveau de la zone de contact (40) avec le diaphragme (14).

4. Embrayage selon la revendication 3, **caractérisé en ce que** la première partie (38) formant rondelle Belleville du second organe annulaire élastique (24) présente, au niveau de la zone de contact (40) avec le diaphragme (14), un rayon de courbure, dans tout plan axial de l'embrayage (10), au moins égal à 5 mm.

5. Embrayage selon l'une quelconque des revendications précédentes, **caractérisé en ce que** le second organe annulaire élastique (24) comporte une deuxième partie (42) formant rondelle Belleville en contact avec le premier organe annulaire rigide (26) ou avec le couvercle (12).

6. Embrayage selon la revendication 5, **caractérisé en ce que** la deuxième partie (42) formant rondelle Belleville du second organe annulaire élastique (24) est coudée au niveau de la zone de contact (44) avec le premier organe annulaire rigide (26) ou avec le couvercle (12).

7. Embrayage selon la revendication 6, **caractérisé en ce que** la deuxième partie (42) formant rondelle Belleville du second organe annulaire élastique (24) présente, au niveau de la zone de contact (44) avec le premier organe annulaire rigide (26) ou avec le couvercle (12), un rayon de courbure, dans tout plan axial de l'embrayage (10), au moins égal à 5 mm.

8. Embrayage selon l'une quelconque des revendications précédentes, **caractérisé en ce que** les entretoises (28) sont fixées au couvercle (12) et traversent le diaphragme (14).

9. Embrayage selon la revendication 8 **caractérisé en ce que** le second organe annulaire élastique (24) présente des évidements de passage (46) pour les entretoises (28).

10. Embrayage selon l'une quelconque des revendications précédentes, **caractérisé en ce que** le second organe annulaire élastique (24) est conformé pour qu'en phase de stockage de l'embrayage, le bord radialement externe du second organe annulaire élastique (24) soit en appui sur le premier organe annulaire rigide (26).

11. Embrayage selon l'une quelconque des revendications précédentes, **caractérisé en ce que**, en phase de stockage de l'embrayage, le diaphragme (14) est en contact avec le bord radialement interne du couvercle (12).

## Claims

1. Diaphragm clutch (10) that comprises a lid (12), a pressure plate (16), a diaphragm (14) mounted between the lid (12) and the pressure plate (16), a first rigid annular member (26) provided between the diaphragm (14) and the pressure plate (16) and attached to the lid (12) by struts (28), a means (22) for articulating the diaphragm relative to the lid (12) and a second pre-stressed elastic annular member (24), mounted so as to bear against the first rigid annular member (26), opposite the articulation means (22) relative to the diaphragm (14), the rigid (26) and elastic (24) annular members being arranged coaxially, the struts (28) being attached relative to the rigid annular member (26) substantially along a fixation circle (C),
**characterized in that** the bearing area of the second elastic annular member (24) onto the first rigid annular member (26) extends substantially along the fixation circle (C) of the struts (28).

2. Clutch according to claim 1, **characterized in that** the second elastic annular member (24) comprises a first portion (38) forming a Belleville spring washer in contact with the diaphragm (14).

3. Clutch according to claim 2, **characterized in that** the first portion (38) forming a Belleville spring washer of the second elastic annular member (24) is bent at the level of the contact area (40) with the diaphragm (14).

4. Clutch according to claim 3, **characterized in that** the first portion (38) forming a Belleville spring washer of the second elastic annular member (24), at the level of the contact area (40) with the diaphragm (14), exhibits a radius of curvature, completely on the axial plane of the clutch (10), at least equal to 5 mm.

5. Clutch according to any one of the preceding claims, **characterized in that** the second elastic annular member (24) comprises a second portion (42) forming a Belleville spring washer in contact with the first rigid annular member (26) or with the lid (12).

6. Clutch according to claim 5, **characterized in that** the second portion (42) forming a Belleville spring washer of the second elastic annular member (24) is bent at the level of the contact area (44) with the first rigid annular member (26) or with the lid (12).

7. Clutch according to claim 6, **characterized in that** the second portion (42) forming a Belleville spring washer of the second elastic annular member (24), at the level of the contact area (44) with the first rigid annular member (26) or with the lid (12), exhibits a radius of curvature, completely on the axial plane of the clutch (10), at least equal to 5 mm.

8. Clutch according to any one of the preceding claims, **characterized in that** the struts (28) are attached to the lid (12) and cross the diaphragm (14).

9. Clutch according to claim 8 **characterized in that** the second elastic annular member (24) exhibits cavities (46) for passage of the struts (28).

10. Clutch according to any one of the preceding claims, **characterized in that** the second elastic annular member (24) is configured so that, during the storage phase of the clutch, the radially external edge of the second elastic annular member (24) bears against the first rigid annular member (26).

11. Clutch according to any one of the preceding claims, **characterized in that**, during the storage phase of the clutch, the diaphragm (14) is in contact with the radially internal edge of the lid (12).

## Patentansprüche

1. Membranfederkupplung (10), umfassend einen Deckel (12), eine Anpressplatte (16), eine zwischen dem Deckel (12) und der Anpressplatte (16) montierte Membranfeder (14), ein zwischen der Membranfeder (14) und der Anpressplatte (16) angeordnetes und am Deckel (12) mittels Querstützen (28) befestigtes starres erstes ringförmiges Organ (26), Mittel (22) zum Anlenken der Membranfeder am Deckel (12) und ein vorgespanntes elastisches zweites ringförmiges Organ (24), welches in Auflage auf dem starren ersten ringförmigen Organ (26) und bezüglich der Membranfeder (14) entgegengesetzt zu den Anlenkmitteln (22) montiert ist, wobei das starre (26) und das elastische (24) ringförmige Organ koaxial angeordnet sind, wobei die Querstützen (28) bezogen auf das starre ringförmige Organ (26) in etwa entlang einem Implantations-Kreis (C) eingesetzt sind,
**dadurch gekennzeichnet, dass** die Auflagezone des elastischen zweiten ringförmigen Organs (24) auf dem starren ersten ringförmigen Organ (26) sich in etwa entlang dem Implantations-Kreis (C) der Querstützen (28) erstreckt.

2. Kupplung nach Anspruch 1, **dadurch gekennzeichnet, dass** das elastische zweite ringförmige Organ (24) einen eine Tellerfeder bildenden ersten Teil (38) aufweist, der in Kontakt mit der Membranfeder (14) ist.

3. Kupplung nach Anspruch 2, **dadurch gekennzeichnet, dass** der eine Tellerfeder bildende erste Teil (38) des elastischen zweiten ringförmigen Organs (24) auf Höhe der Kontaktzone (40) mit der Membranfeder (14) gekröpft ist.

4. Kupplung nach Anspruch 3, **dadurch gekennzeichnet, dass** der eine Tellerfeder bildende erste Teil (38) des elastischen zweiten ringförmigen Organs (24) auf Höhe der Kontaktzone (40) mit der Membranfeder (14) einen Krümmungsradius aufweist, der in jeder axialen Ebene der Kupplung (10) zumindest gleich 5 mm ist.

5. Kupplung nach einem der vorherigen Ansprüche, **dadurch gekennzeichnet, dass** das elastische zweite ringförmige Organ (24) einen eine Tellerfeder bildenden zweiten Teil (42) aufweist, der in Kontakt mit dem starren ersten ringförmigen Organ (26) oder mit dem Deckel (12) ist.

6. Kupplung nach Anspruch 5, **dadurch gekennzeichnet, dass** der eine Tellerfeder bildende zweite Teil (42) des elastischen zweiten ringförmigen Organs (24) auf Höhe der Kontaktzone (44) mit dem starren ersten ringförmigen Organ (26) oder mit dem Deckel (12) gekröpft ist.

7. Kupplung nach Anspruch 6, **dadurch gekennzeichnet, dass** der eine Tellerfeder bildende zweite Teil (42) des elastischen zweiten ringförmigen Organs (24) auf Höhe der Kontaktzone (44) mit dem starren ersten ringförmigen Organ (26) oder mit dem Deckel (12) einen Krümmungsradius aufweist, der in jeder axialen Ebene der Kupplung (10) zumindest gleich 5 mm ist.

8. Kupplung nach einem der vorherigen Ansprüche, **dadurch gekennzeichnet, dass** die Querstützen (28) am Deckel (12) befestigt sind und die Membranfeder (14) durchqueren.

9. Kupplung nach Anspruch 8, **dadurch gekennzeichnet, dass** das elastische zweite ringförmige Organ (24) Durchgangsöffnungen (46) für die Querstützen (28) aufweist.

10. Kupplung nach einem der vorherigen Ansprüche, **dadurch gekennzeichnet, dass** das elastische zweite ringförmige Organ (24) dafür angepasst ist, dass in der Lagerungsphase der Kupplung der radial äußere Rand des elastischen zweiten ringförmigen Organs (24) in Anlage auf dem starren ersten ringförmigen Organ (26) ist.

11. Kupplung nach einem der vorherigen Ansprüche, **dadurch gekennzeichnet, dass** in der Lagerungsphase der Kupplung die Membranfeder (14) in Kontakt mit dem radial inneren Rand des Deckels (12) ist.
